# FASCICULE DE BREVET EUROPEEN

(11) **EP 1 339 568 B1**
(45) Date de publication et mention de la délivrance du brevet: **07.09.2005**
(21) Numéro de dépôt: 02767482.9
(22) Date de dépôt: 11.09.2002
(51) Int. Cl.: B60R 11/02

(54) **HOUSSE D'HABILLAGE D'UN COUSSIN EQUIPEE D'UN BOITIER ET PROCEDE DE MONTAGE D'UN BOITIER SUR UNE HOUSSE D'HABILLAGE D'UN COUSSIN**
KISSENÜBERZUG MIT EINEM GEHÄUSE UND VERFAHREN ZUR MONTAGE EINES GEHÄUSES AUF EINEM KISSENÜBERZUG
CUSHION COVER EQUIPPED WITH A HOUSING AND METHOD FOR MOUNTING A HOUSING ON A CUSHION COVER

(30) Priorité: 26.09.2001 FR 0112359
(43) Date de publication de la demande: 03.09.2003
(73) Titulaire: SEVIC SYSTEM AG, 56564 Neuwied (DE)
(72) Inventeur: JOST, Gilbert, L-4970 BETTANGE/MESS (LU)
(74) Mandataire: Dennemeyer, John James
(86) Numéro de dépôt international: PCT/EP2002/010190
(87) Numéro de publication internationale: WO 2003/029050

(56) Documents cités:
- DE-U- 29 518 369
- JP-A- 2001 047 921
- US-A- 4 647 980

## Description

La présente invention concerne une housse d'habillage d'un coussin de type appui-tête ou de type dossier de siège ladite housse étant munie d'un boîtier genre haut-parleur console intégrale de jeu, simple écran pour lecteur DVD ou pour console de jeu.

L'invention concerne également un procédé de montage d'un boîtier sur une housse d'habillage d'un coussin de ce type.

Les appui-tête ou les parties supérieures des dossiers de sièges de véhicules automobiles, de trains, voire même d'avions, sont parfois équipés de boîtiers vidéo du genre console intégrale de jeu, simple écran de console de jeu; écran LCD pour lecteur DVD, ou autres ... permettant à la personne placée derrière le siège ainsi équipé, par exemple de visionner un film, de visualiser des informations publicitaires notamment par liaison radio, de jouer, voire même d'accéder au réseau Internet.

Les coussins correspondants sont constitués d'un bloc de mousse synthétique recouvert d'une housse d'habillage en tissu, cuir ou matière plastique. Ils sont structurés et préparés de manière adaptée pour recevoir, in fine, le boîtier vidéo ; en particulier, ils comportent un logement d'encastrement du boîtier et un socle de fixation intégré.

Cependant, ces particularités compliquent sensiblement la fabrication des coussins correspondants, notamment du fait de la nécessité de prévoir des moyens de fixation internes, et aussi à cause de la préparation particulière de la housse d'habillage nécessaire pour permettre la réception du boîtier vidéo et l'obtention d'une finition de qualité. Dans tous les cas, les coussins de réception doivent être conçus ou modifiés spécifiquement pour permettre l'adaptation du boîtier.

Des exemples d'appui-tête comportant des coussins de réception de boîtier vidéo de ce type sont décrits dans les documents US-A-4 647 980 et JP-A-201 047921.

Le document DE-U-295 18 369 décrit une housse d'habillage d'un coussin de type appui-tête ou de type dossier de siège selon le préambule de la revendication 1. En particulier, ce document montre une housse d'habillage munie d'un boîtier genre haut-parleur, console intégrale de jeu, simple écran pour lecteur DVD ou pour console de jeu, une ouverture étant aménagée dans la housse, ladite ouverture comportant une bordure périphérique. Ce document DE-U-295 18 369 décrit aussi un procédé de montage de la housse d'habillage selon le préambule de la revendication 10.

La présente invention a pour but de simplifier le montage de ce genre de boîtier sur la housse d'habillage du coussin et de proposer des moyens permettant de standardiser l'équipement de ces coussins.

Un autre but de la présente invention est de fixer le boîtier directement sur la housse d'habillage, avant de monter ladite housse sur un coussin de réception.

Ces buts ainsi que d'autres sont atteints, suivant l'invention, par une nouvelle housse d'habillage d'un coussin de type appui-tête ou dossier de siège ayant les caractéristiques de la partie caractérisante de la revendication 1, et par un nouveau procédé de montage d'un boîtier sur une housse d'habillage suivant la partie caractérisante de la revendication 10.

Selon l'invention, la fixation du boîtier s'effectue par une prise en sandwich de la housse d'habillage entre ledit boîtier et une structure rigide rapportée, positionnée contre la face interne de ladite housse.

Toujours selon l'invention, le procédé conforme à la présente invention consiste à aménager une ouverture de forme et de dimensions appropriées dans la housse d'habillage, puis à fixer le boîtier sur cette housse par prise en sandwich de la bordure périphérique de ladite ouverture entre ledit boîtier et la structure rigide rapportée positionnée contre la face interne de ladite housse.

Le boîtier peut être encastré à force dans la structure interne rapportée qui se présente sous la forme d'un cadre. Il peut aussi être solidarisé avec cette structure rapportée, par des moyens mécaniques appropriés. On peut également prévoir la présence d'une structure rapportée en forme de cadre venant se positionner sur le pourtour du boîtier et munie de moyens de serrage sur ledit boîtier. On peut encore envisager de fixer la structure rigide rapportée sur la face interne de la housse d'habillage, puis de fixer le boîtier sur ladite structure rapportée, tout en venant de préférence prendre en sandwich la housse d'habillage entre ledit boîtier et ladite structure.

Selon une variante de réalisation, on peut fixer directement, par collage ou autre, la bordure périphérique d'une ouverture réalisée dans la housse d'habillage, sur le pourtour du boîtier, et en particulier sur une collerette débordante de ce boîtier.

Selon l'invention la housse d'habillage est équipée d'un boîtier qui coopère avec une structure rigide rapportée, disposée contre la face interne de ladite housse, pour la fixation dudit boîtier sur la bordure périphérique d'une ouverture aménagée au préalable dans ladite housse.
Le boîtier comporte une collerette débordante qui s'étend dans le plan ou sensiblement dans le plan de sa face frontale, laquelle collerette coopère avec la structure rapportée en forme de cadre pour prendre en sandwich la bordure périphérique de l'ouverture aménagée dans la housse.

La structure rapportée peut se présenter sous la forme d'un cadre plan ou d'un cadre tubulaire. Dans ce dernier cas, elle peut comporter une collerette débordante au niveau de sa bordure frontale ; la bordure arrière de ce cadre peut aussi se prolonger par un fond dans lequel est aménagée une ouverture pour le passage du ou des câble(s) d'alimentation du boîtier.

Le boîtier peut être solidarisé avec la structure rapportée par des moyens d'encliquetage ou par des moyens mécaniques rapportés, du type vis ou clips de serrage.

L'invention sera encore illustrée, sans être aucunement limitée, par la description suivante de différents modes de réalisation, donnés uniquement à titre d'exemples et représentés sur les dessins annexés dans lesquels :
- la figure 1 est une vue schématique, en coupe et de côté, qui illustre le montage conforme à la présente invention d'un boîtier sur un appui-tête de siège ;
- la figure 2 est une vue de face qui montre la découpe réalisée dans la housse d'habillage pour la réception du boîtier vidéo ;
- la figure 3 est une vue schématique qui montre les différents éléments du montage de la figuré 1, avant leur assemblage ;
- la figure 4 est une vue schématique qui illustre la fixation du boîtier vidéo sur la housse d'habillage, avant le montage de celle-ci sur le coussin d'appui-tête ;
- les figures 5 à 10 sont des vues schématiques partielles qui illustrent différents modes de montage possibles du boîtier sur la housse d'habillage.

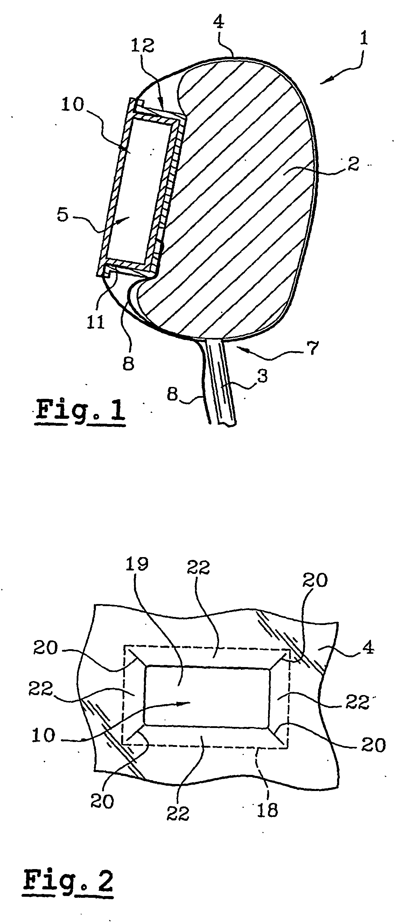

La figure 1 représente un ensemble appui-tête 1, vu en coupe et de côté, constitué d'un coussin de mousse synthétique 2 muni de tiges 3 qui permettent son ancrage sur le dessus d'un dossier de siège. Les tiges d'ancrage 3 sont fixées de manière classique sur un socle support, non représenté, intégré dans le coussin de mousse 2.

Le coussin de mousse 2 est revêtu d'une housse d'habillage 4 en matière appropriée, par exemple tissu, cuir ou matière plastique, sur laquelle est fixé un boîtier 5, en particulier un boîtier vidéo.

Ce boîtier 5 est disposé sur la face arrière de l'appui-tête 1. Comme indiqué précédemment, ce boîtier 5 peut consister en une structure monobloc en forme de console électronique. Il peut aussi se présenter en deux parties : l'une en forme de console électronique et l'autre en forme de réceptacle d'encastrement de ladite console ; dans ce dernier cas, l'ensemble console-réceptacle peut être fixé d'emblée sur la housse d'habillage, ou bien on peut fixer dans un premier temps uniquement le réceptacle d'encastrement, la console électronique étant rapportée par la suite. Ce boîtier 5 peut se présenter sous la forme d'une console intégrale de jeu ; il peut aussi s'agir d'un simple écran, par exemple un écran LCD, relié à une console électronique, notamment un lecteur DVD, une console de jeu, ou autre...

La structure de housse 4 est conformée pour venir épouser au mieux les contours du coussin 2. De manière classique, elle comporte une ouverture inférieure 7 qui permet son positionnement sur le coussin 2, laquelle ouverture 7 est associée à des organes de fermeture amovible genre élastiques, bandes auto-agrippantes ou simple cordelette de serrage par exemple.

Conformément à la présente invention, le boîtier vidéo 5 est fixé sur la housse d'habillage 4 avant le positionnement de celle-ci sur le coussin 2.

La face avant du boîtier 5 se situe dans le prolongement ou sensiblement dans le prolongement de la surface de recouvrement de la housse, et sa face arrière vient se plaquer contre la face dorsale du coussin de mousse 2, qui peut légèrement se déformer à ce niveau en fonction de la pression appliquée.

On comprend que le coussin de mousse 2 peut être un coussin standard ou quasi standard d'appui-tête, revêtu ou non de sa propre housse d'habillage d'origine.

Si besoin est, une simple réservation peut être aménagée dans la face dorsale de ce coussin, pour intégrer au moins en partie l'épaisseur du boîtier 5.

Dans tous les cas, le boîtier 5 est fermement maintenu en place par la tension de la housse 4 qui se plaque contre le coussin 2.

Le ou les éventuels câbles 8 qui assurent l'alimentation du boîtier vidéo passent par l'ouverture 7 aménagée dans la partie inférieure de la housse 4 ; ils peuvent ensuite longer l'une des tiges d'ancrage 3 de l'appui-tête, puis pénétrer dans le dossier de siège pour rejoindre la source d'alimentation. On notera ici que si le boîtier 5 consiste en un simple écran, la liaison de cet écran avec la console électronique (type lecteur DVD par exemple) peut être réalisée soit par des câbles, soit par liaison radio.

La fixation du boîtier 5 sur la housse 4 s'effectue par tout moyen approprié.

De préférence, on aménage une ouverture ou découpe 10 dans la housse 4, dont la forme et les dimensions sont adaptées à celles du boîtier 5 ; et on fixe ce boîtier par prise en sandwich de la bordure périphérique 11 de ladite ouverture 10, entre ledit boîtier 5 et une structure rigide rapportée 12, positionnée du côté de la face interne de la housse 4.

Ce type de fixation particulier est détaillé sur les figures 2 à 4.

Le boîtier 5 illustré sur les figures consiste en un boîtier de forme générale parallélépipédique avec une face avant 14, une face arrière 15 et quatre parois de côté 16. Ces quatre parois 16 forment ensemble une structure d'encadrement.
Le boîtier 5 comporte encore un rebord périphérique ou collerette débordante 17, qui s'étend en saillie dans le prolongement de la face avant 14 ; ce rebord périphérique 17 s'étend perpendiculairement ou sensiblement perpendiculairement aux parois de côté 16.

La figure 2 illustre l'ouverture 10 réalisée dans la housse 4 pour la réception du boîtier 5. On remarque ici l'encombrement général rectangulaire du boîtier illustré par la ligne de pointillés 18. L'ouverture 10 correspond à une découpe rectangulaire 19 de dimensions plus petites que l'encombrement général du boîtier, associée à quatre lignes de coupe 20 qui prolongent les angles.

On obtient ainsi quatre volets de matière 22 constituant ensemble la bordure périphérique 11 de l'ouverture 10, susceptibles d'être pris en sandwich entre le boîtier 5 et la structure interne rapportée 12.

Sur les figures 1, 3 et 4, cette structure rapportée 12 consiste en un cadre tubulaire 24, ici de forme parallélépipédique, dont les dimensions générales sont très légèrement supérieures à celles de la structure d'encadrement formée par les quatre parois latérales 16 du boîtier 5.
La bordure frontale de ce cadre 24 comporte ici une collerette périphérique débordante 25 ; sa bordure arrière se prolonge par un élément de fond 26.
On remarque la présence d'un orifice 27 aménagé dans le fond 26 de la structure rapportée 12, pour le passage du ou des câbles d'alimentation 8 du boîtier 5.

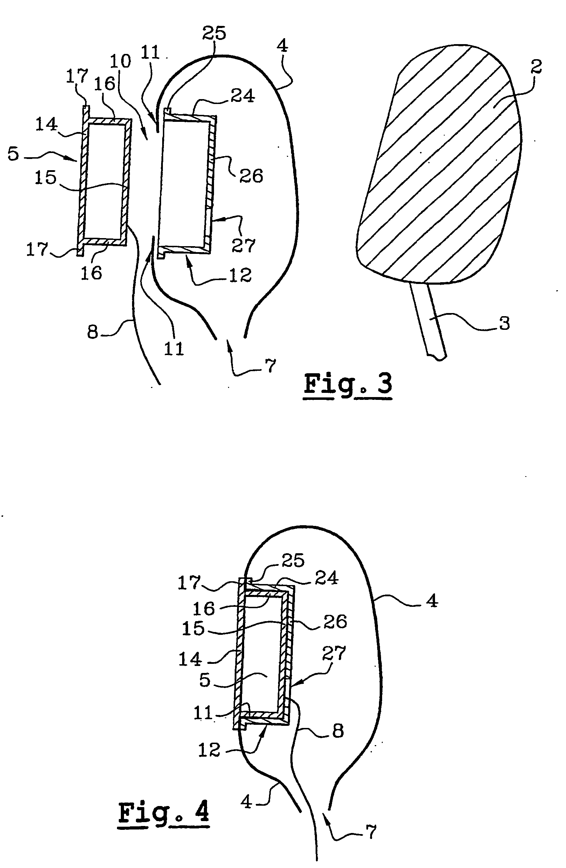

L'assemblage des différentes pièces s'effectue en positionnant le boîtier 5 et la structure rapportée 12 en regard de l'ouverture 10 de la housse 4, respectivement côté extérieur et côté intérieur (figure 3).
Il suffit ensuite d'encastrer le boîtier 5 dans la structure rapportée 12 tout en pinçant la bordure périphérique 11 de l'ouverture 10 de la housse pour obtenir un assemblage convenable.

Les pans ou volets de matière 22 qui forment la bordure périphérique 11 de l'ouverture 10 de la housse sont pris en sandwich, d'une part, entre les deux cadres parallélépipédiques 16 et 24, et d'autre part, entre le rebord 17 et la collerette 25, respectivement du boîtier 5 et de la structure rapportée 12. Cette prise en sandwich ou ce pincement permet d'assurer un maintien correct du boîtier 5 sur la housse d'habillage 4.
Le fond 15 du boîtier 5 vient en contact ou pratiquement en contact avec l'élément de fond 26 de la structure rapportée 12.

Bien entendu, au cours de cet assemblage, on prend soin de passer le ou les câbles d'alimentation 8 dans l'orifice 27 de la structure rapportée 12, de manière à assurer son ou leur intégration dans la housse 4.

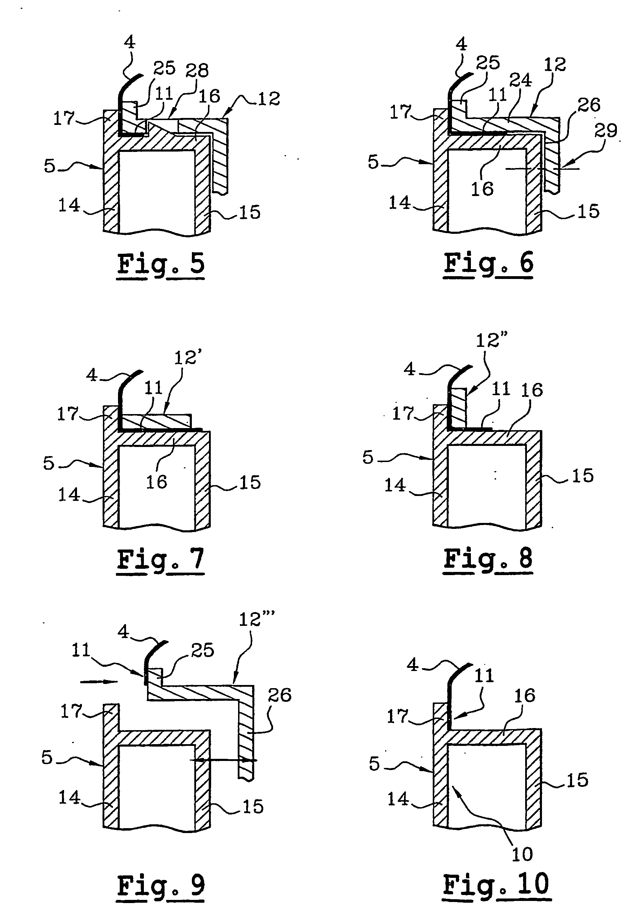

L'assemblage du boîtier 5 avec la structure rapportée 12 et la housse 4 peut s'effectuer par simple encastrement à force.
Cet assemblage peut aussi être réalisé au moyen d'organes d'encliquetage appropriés, dont une forme de réalisation possible est illustrée schématiquement en 28, sur la figure 5, ou encore au moyen d'organes de solidarisation rapportés, type vis ou clips de serrage 29, tel qu'illustré sur la figure 6.
Sur cette figure 6, les vis ou clips de serrage 29 assemblent les éléments de fond 15 et 26, respectivement du boîtier 5 et de la structure rapportée 12 ; on peut aussi envisager d'assembler de cette manière les deux cadres 16 et 24, ou encore les deux structures débordantes 17 et 25.

Dans une variante de réalisation illustrée sur la figure 7, la structure rapportée peut se présenter sous la forme d'un simple cadre tubulaire parallélépipédique 12'. Là encore, l'assemblage des différents éléments peut être réalisé par simple encastrement à force, par tout moyen d'encliquetage approprié, ou par des éléments de solidarisation rapportés type vis, clips ou autres.
On peut aussi envisager d'utiliser un cadre ouvert, s'apparentant à un cerclage, associé à des moyens qui permettent son serrage sur le boîtier 5.

Comme cela apparaît sur la figure 8, la structure rapportée peut encore se présenter sous la forme d'un cadre plan 12" venant prendre en sandwich la housse 4, en association avec le rebord périphérique 17 du boîtier 5.

Dans une autre forme de réalisation possible, illustrée sur la figure 9, la bordure frontale de la structure rapportée 12''' peut être fixée sur la face interne de la housse 4, avant la solidarisation entre ladite structure rapportée 12''' et le boîtier 5. Dans ce cas, la fixation de la bordure périphérique 11 de l'ouverture 10 de la housse 4 sur la structure rapportée 12''' peut par exemple être réalisée par collage, au moyen d'une colle appropriée ou au moyen d'une technique de thermofusion.
La solidarisation entre la structure rapportée 12''' et le boîtier 5 peut ici encore être réalisée par tous moyens appropriés tels que ceux énumérés et présentés ci-avant.
Lors de la solidarisation entre le boîtier 5 et la structure rapportée 12"', on vient de préférence encore pincer la housse d'habillage 4 pour optimiser l'assemblage des différents éléments.

Dans une autre variante de réalisation possible, schématisée sur la figure 10, la bordure périphérique 11 de l'ouverture 10 de la housse peut être directement fixée par collage ou autre, sur la collerette 17 du boîtier 5.

En fonction de la technique retenue, si cela permet de faciliter les manipulations, la fixation du boîtier 5 sur la housse 4 peut être réalisée après retoumement de ladite housse sur elle-même.

Une fois la housse d'habillage 4 équipée du boîtier 5, celle-ci peut être montée sur le coussin d'appui-tête 2 d'une manière tout-à-fait classique.

Le montage d'un boîtier sur une housse de dossier de siège peut être réalisé d'une manière similaire, en vue d'équiper la partie supérieure de ce dossier de siège.

On notera encore que le principe de montage faisant l'objet de la présente invention peut être appliqué pour l'adaptation sur la housse d'habillage de hauts-parleurs, support(s) de télécommande ou autres dispositifs du même genre.

## Revendications

1. Housse d'habillage (4) d'un coussin (2) de type appui-tête ou de type dossier de siège,
ladite housse (4) étant munie d'un boîtier (5), genre haut-parleur, console intégrale de jeu, simple écran pour lecteur DVD ou pour console de jeu,
une ouverture (10) étant aménagée dans ladite housse (4), ladite ouverture (10) comportant une bordure périphérique (11),
**caractérisée en ce que** le boîtier (5) est muni d'une collerette débordante (17) qui s'étend dans le plan ou sensiblement dans le plan de sa face frontale (14), et **en ce que**
le boîtier (5) coopère avec une structure rigide rapportée (12 , 12', 12", 12''') disposée contre la face interne de la housse (4), pour la fixation dudit boîtier (5) sur la bordure périphérique (11) de l'ouverture (10),
ladite collerette débordante (17) coopérant avec la structure rigide rapportée (12, 12', 12", 12''') pour prendre en sandwich la bordure périphérique (11) de l'ouverture (10), avec la face externe de la housse (4) positionnée contre le boîtier (5).

2. Housse d'habillage selon la revendication 1, **caractérisée en ce que** la structure rigide rapportée (12, 12', 12", 12''') est en forme de cadre (12, 12' 12", 12''').

3. Housse d'habillage selon la revendication 2, **caractérisée en ce que** le cadre (12") est plan.

4. Housse d'habillage selon la revendication 2, **caractérisée en ce que** le cadre (12, 12', 12", 12''') est tubulaire.

5. Housse d'habillage selon la revendication 2, **caractérisée en ce que** la structure rigide rapportée (12,12''') en forme de cadre est munie d'une collerette débordante (25) au niveau de la face frontale (14) du cadre.

6. Housse d'habillage selon l'une quelconque des revendications 4 ou 5, **caractérisée en ce que** la structure rigide rapportée (12",12''') en forme de cadre est munie d'un fond (26) au niveau de la bordure arrière du cadre, dans lequel fond (26) est aménagée une ouverture (27) pour le passage du ou des câbles (8) d'alimentation du boîtier (5).

7. Housse d'habillage selon l'une quelconque des revendications 1 à 6, **caractérisée en ce que** le boîtier (5) est solidarisé avec la structure rigide rapportée (12, 12', 12", 12''') par des moyens d'encliquetage (28).

8. Housse d'habillage selon l'une quelconque des revendications 1 à 6, **caractérisée en ce que** le boîtier (5) est solidarisé avec la structure rigide rapportée (12, 12', 12", 12''') au moyen d'organes de fixation rapportés (29) de type vis ou clips de serrage.

9. Housse d'habillage selon la revendication 1, **caractérisée en ce que** la bordure périphérique (11) de l'ouverture (10) est directement fixée, par collage, sur la structure rigide rapportée (12''').

10. Procédé de montage d'un boîtier (5), genre haut-parleur, console intégrale de jeu, simple écran pour lecteur DVD ou pour console de jeu, sur une housse d'habillage (4) d'un coussin (2) de type appui-tête ou de type dossier de siège selon la revendication 1, le procédé consistant à :
- aménager une ouverture (10) de forme et de dimensions appropriées dans la housse d'habillage (4) ladite ouverture (10) comportant une bordure périphérique (11),
- fixer le boîtier (5), directement sur la housse d'habillage (4) avant de monter ladite housse (4) sur le coussin (2),
**caractérisé en ce que** le procédé consiste à :
- fixer le boîtier (5) sur la bordure périphérique (11) de l'ouverture (10) par prise en sandwich de ladite housse (4) entre la collerette débordante (17) du boîtier (5) et la structure rigide rapportée (12, 12', 12''') disposée contre la face interne de ladite housse (4), la face externe de ladite housse (4) étant positionnée contre le boîtier (5).

11. Procédé selon la revendication 10, **caractérisé en ce qu'**il consiste à fixer le boîtier (5) sur la housse (4) par encastrement dudit boîtier (5) dans la structure rigide rapportée (12, 12', 12", 12''') qui est en forme de cadre, puis à solidariser ledit boîtier (5) avec ladite structure rigide rapportée, par des moyens mécaniques appropriés (28, 29).

12. Procédé selon l'une quelconque des revendications 10 ou 11, **caractérisé en ce que** la structure rigide rapportée (12''') est d'abord fixée sur la face interne de la housse d'habillage (4), puis le boîtier (5) est fixé sur ladite structure rigide rapportée (12''') tout en venant prendre en sandwich la housse d'habillage (4) entre ledit boîtier (5) et ladite structure rigide rapportée (12''').

13. Procédé selon la revendication 10, **caractérisé en ce que** la structure rigide rapportée (12') est en forme de cadre qui est positionné sur le pourtour dudit boîtier (5) et qui est muni de moyens de serrage sur ledit boîtier (5).

14. Procédé selon la revendication 10, **caractérisé en ce qu'**il consiste à fixer le boîtier (5) sur la housse d'habillage (4) par encastrement à force dudit boîtier (5) dans la structure rigide rapportée (12, 12', 12", 12'''), en forme de cadre.

15. Procédé selon la revendication 10, **caractérisé en ce qu'**il consiste à fixer directement la bordure périphérique (11) de l'ouverture (10) réalisée dans la housse (4) sur le pourtour du boîtier (5) et en particulier sur la collerette débordante (17) du boîtier (5).

## Patentansprüche

1. Schonbezug (4) eines Kissens (2) von der Art einer Kopfstütze oder der Art einer Sitzlehne,
wobei der Bezug (4) mit einem Gehäuse (5) von der Art eines Lautsprechers, eines vollständigen Spielgeräts, eines einfachen Bildschirms für einen DVD-Player oder für ein Spielgerät versehen ist,
wobei eine Öffnung (10) in dem Bezug (4) eingerichtet ist, wobei die Öffnung (10) eine umlaufende Einfassung (11) umfasst,
**dadurch gekennzeichnet, dass** das Gehäuse (5) mit einem überstehenden Rand (17) versehen ist, der sich in der Ebene oder im Wesentlichen in der Ebene seiner Vorderseite (14) erstreckt, und dass
das Gehäuse (5) mit einer versteiften Struktur (12, 12', 12", 12'") zusammenwirkt, die an der Innenseite des Bezugs (4) angeordnet ist, um das Gehäuse (5) an der umlaufenden Einfassung (11) der Öffnung (10) zu befestigen,
wobei der überstehende Rand (17) mit der versteiften Struktur (12, 12', 12", 12'") zusammenwirkt, um die umlaufende Einfassung (11) der Öffnung (10) einzuklemmen, wobei die Außenseite des Bezugs (4) an dem Gehäuse (5) angeordnet ist.

2. Schonbezug nach Anspruch 1, **dadurch gekennzeichnet, dass** die versteifte Struktur (12, 12', 12", 12'") rahmenförmig (12, 12', 12", 12'") ist.

3. Schonbezug nach Anspruch 2, **dadurch gekennzeichnet, dass** der Rahmen (12") eben ist.

4. Schonbezug nach Anspruch 2, **dadurch gekennzeichnet, dass** der Rahmen (12, 12', 12", 12'") rohrförmig ist.

5. Schonbezug nach Anspruch 2, **dadurch gekennzeichnet, dass** die rahmenförmige versteifte Struktur (12, 12'") an der Vorderseite (14) des Rahmens mit einem überstehenden Rand (25) versehen ist.

6. Schonbezug nach einem der Ansprüche 4 oder 5, **dadurch gekennzeichnet, dass** die rahmenförmige versteifte Struktur (12, 12', 12", 12'") an der hinteren Einfassung des Rahmens mit einer Rückwand (26) versehen ist, in die eine Öffnung (27) für den Durchgang des oder der Versorgungskabel(s) (8) des Gehäuses (5) eingerichtet ist.

7. Schonbezug nach einem der Ansprüche 1 bis 6, **dadurch gekennzeichnet, dass** das Gehäuse (5) mit der versteiften Struktur (12, 12', 12", 12'") durch Einrastmittel (28) einstückig gemacht ist.

8. Schonbezug nach einem der Ansprüche 1 bis 6, **dadurch gekennzeichnet, dass** das Gehäuse (5) mit der versteiften Struktur (12, 12', 12", 12'") mittels angesetzter Befestigungsorgane (29) wie Schrauben oder Klemmringe einstückig gemacht ist.

9. Schonbezug nach Anspruch 1, **dadurch gekennzeichnet, dass** die umlaufende Einfassung (11) der Öffnung (10) direkt durch Kleben an der versteiften Struktur (12'") befestigt ist.

10. Verfahren zum Einbauen eines Gehäuses (5) von der Art eines Lautsprechers, eines vollständigen Spielgeräts, eines einfachen Bildschirms für einen DVD-Player oder ein Spielgerät in einen Schonbezug (4) eines Kissens (2) von der Art einer Kopfstütze oder von der Art einer Sitzlehne nach Anspruch 1, wobei das Verfahren folgende Schritte umfasst:
- Einrichten einer Öffnung (10) mit geeigneter Form und geeigneten Abmessungen in dem Schonbezug (4), wobei die Öffnung (10) eine umlaufende Einfassung (11) umfasst,
- Befestigen des Gehäuses (5) direkt an dem Schonbezug (4), ehe der Bezug (4) an dem Kissen (2) angebracht wird,
**dadurch gekennzeichnet, dass** das Verfahren folgenden Schritt umfasst:
- Befestigen des Gehäuses (5) an der umlaufenden Einfassung (11) der Öffnung (10) durch Einklemmen des Bezugs (4) zwischen dem überstehenden Rand (17) des Gehäuses (5) und der versteiften Struktur (12, 12', 12", 12'"), die an der Innenseite des Bezugs (4) angeordnet ist, wobei die Außenseite des Bezugs (4) an dem Gehäuse (5) angeordnet ist.

11. Verfahren nach Anspruch 10, **dadurch gekennzeichnet, dass** es darin besteht, das Gehäuse (5) an dem Bezug (4) durch Versenken des Gehäuses (5) in der rahmenförmigen versteiften Struktur (12, 12', 12", 12'"), dann das Gehäuse (5) mit der versteiften Struktur durch geeignete mechanische Mittel (28, 29) zu befestigen.

12. Verfahren nach einem der Ansprüche 10 oder 11, **dadurch gekennzeichnet, dass** die versteifte Struktur (12"') zunächst an der Innenseite des Schonbezugs (4) befestigt wird, dann das Gehäuse (5) an der versteiften Struktur (12'") befestigt wird, wobei der Schonbezug (4) zwischen dem Gehäuse (5) und der versteiften Struktur (12'") eingeklemmt wird.

13. Verfahren nach Anspruch 10, **dadurch gekennzeichnet, dass** die versteifte Struktur (12') die Form eines Rahmens aufweist, der auf der Umrandung des Gehäuses (5) angeordnet ist und der mit Klemmmitteln auf dem Gehäuse (5) versehen ist.

14. Verfahren nach Anspruch 10, **dadurch gekennzeichnet, dass** es darin besteht, das Gehäuse (5) an dem Schonbezug (4) durch zwangsläufiges Versenken des Gehäuses (5) in der rahmenförmigen versteiften Struktur (12, 12', 12", 12'") zu befestigen.

15. Verfahren nach Anspruch 10, **dadurch gekennzeichnet, dass** es darin besteht, die umlaufende Einfassung (11) der Öffnung (10), die in dem Bezug (4) ausgebildet ist, direkt an der Umrandung des Gehäuses (5) und insbesondere an dem überstehenden Rand (17) des Gehäuses (5) zu befestigen.

## Claims

1. A cover for a cushion (2) of the type of a headrest or a seat back cushion,
said cover comprising a case (5), such as a loudspeaker, an integral play station, a simple screen for a DVD reader or for a play station,
an opening (10) being provided in said cover (4), said opening (10) having a peripheral rim (11),
**characterized in that** said case (5) is fitted with a protruding collar (17) which extends to the plane or substantially on the plane of its front face (14), and **in that**
said case (5) works together with an added-on rigid structure (12, 12', 12", 12"') laid out against the internal face of the cover (4), for fastening said case (5) on the peripheral rim (11) of said opening (10),
said protruding collar (17) working together with the added-on rigid structure (12, 12', 12", 12"')in order to pinch the peripheral rim (11) of the opening (10) with the internal face of the cover (4) positioned against the case (5).

2. A protection cover according to claim 1, **characterized in that** said added-on structure (12, 12', 12", 12"') is in the form of a frame (12, 12', 12", 12"').

3. A protection cover according to claim 2, **characterized in that** said frame (12, 12', 12", 12"') is planar.

4. A protection cover according to claim 2, **characterized in that** said frame (12, 12', 12", 12"') is tubular.

5. A protection cover according to claim 2, **characterized in that** said added-on structure (12, 12"') in the form of a frame is fitted with a protruding collar (25) at the front face (14) of the frame.

6. A protection cover according to any of claims 4 or 5, **characterized in that** said added-on structure (12, 12"') in the form of a frame is fitted with a bottom (26), at the rear rim of the frame, in which bottom (26) is provided an opening (27) to let through the cable or cables (8) supplying the case (5).

7. A protection cover according to any of the claims 1 to 6, **characterized in that** said case (5) is interconnected with the added-on structure (12, 12', 12", 12"')by latching means (28).

8. A protection cover according to any of the claims 1 to 6, **characterized in that** said case (5) is interconnected with the added-on structure (12, 12', 12", 12"')by means of appropriate added-on fastening members (29) such as screws or clamping clips.

9. A protection cover according to claim 1, **characterized in that** the peripheral rim (11) of the opening (10) is directly fastened, by gluing, to the added on rigid structure (12"').

10. A method of assembling a case (5), such as a loudspeaker, an integral play station, a simple screen for a DVD reader or for a play station, on a protection cover (4) of a cushion (2) of a headrest or a seat back cushion, according to claim 1,
said method comprising:
- providing an opening (10) with appropriate shape and dimensions in the protection cover (4), said opening (10) having a peripheral rim (11),
- fastening said case (5) directly on said protection cover (4),and then mounting said cover (4) on said cushion (2),
**characterized in that** the method comprises:
- fastening the case (5) on the peripheral rim (11) of said cover (4) by pinching said cover (4) between the collar (17) protruding from the case (5) and the added-on rigid structure (12, 12', 12", 12"') laid out against the internal face of said cover (4), the external face of said cover (4) being positioned against said case (5).

11. A method according to claim 10, **characterized in that** the method comprises fastening the case (5) on the cover (4) by embedding said case (5) in the added-on structure (12, 12', 12", 12"') in the form of a frame, then interconnecting said case (5) with said added-on structure by appropriate mechanical means (28, 29).

12. A method according to any of claims 10 or 11, **characterized in that** the added-on structure (12"') is first fastened on the internal face of the protection cover (4), then the case (5) is fastened on said added-on structure (12"') while pinching the protection cover (4) between said case (5) and said added-on structure (12"').

13. A method according to claim 10, **characterized in that** the added-on structure (12"') is in the form of a frame which is positioned on the contour of said case (5) and which is fitted with clamping means on said case (5).

14. A method according to claim 10, **characterized in that** the method comprises fastening the case (5) on the protection cover (4) by forcibly embedding said case (5) in the added-on structure (12, 12', 12", 12"') in the form of a frame.

15. A method according to claim 10, **characterized in that** the method comprises fastening directly the peripheral rim (11) of the opening (10) made in the cover (4) on the contour of said case (5) and in particular on the collar (17) protruding from the case (5).
